# EUROPÄISCHE PATENTSCHRIFT

(11) **EP 3 452 311 B1**
(45) Veröffentlichungstag und Bekanntmachung des Hinweises auf die Patenterteilung: **30.08.2023**
(21) Anmeldenummer: 17710476.7
(22) Anmeldetag: 10.03.2017
(51) Int. Cl.: B60G 11/27, B60G 17/019

(54) **LUFTGEFEDERTES FAHRZEUG UND VERFAHREN ZUR ELEKTRONISCHEN NIVEAUREGELUNG EINES LUFTGEFEDERTEN FAHRZEUGS**
AIR-SUSPENDED VEHICLE AND METHOD FOR ELECTRONIC LEVEL CONTROL OF AN AIR-SUSPENDED VEHICLE
VÉHICULE À SUSPENSION PNEUMATIQUE ET MÉTHODE POUR LA RÉGULATION ÉLECTRONIQUE DE NIVEAU D'UN VÉHICULE À SUSPENSION PNEUMATIQUE

(30) Priorität: 04.05.2016 DE 102016005539
(43) Veröffentlichungstag der Anmeldung: 13.03.2019
(73) Patentinhaber: ZF CV Systems Europe BV, 1170 Brussels (BE)
(72) Erfinder: BORMANN, Dirk, 31191 Algermissen (DE); GRÖGER, Jens, 30163 Hannover (DE); SWOBODA, Marek, 30826 Garbsen (DE)
(74) Vertreter: Ohlendorf, Henrike
(86) Internationale Anmeldenummer: PCT/EP2017/000316
(87) Internationale Veröffentlichungsnummer: WO 2017/190818

(56) Entgegenhaltungen:
- EP-A1- 0 534 645
- EP-A2- 1 980 426
- CN-U- 204 432 407
- CN-Y- 2 151 913
- DE-A1- 3 821 569
- DE-A1- 19 526 077
- DE-A1-102013 224 235
- DE-C1- 4 415 760
- DE-U1- 9 412 038
- US-A- 4 634 143
- US-A- 4 961 055
- US-A1- 2003 075 882
- US-A1- 2005 040 573
- US-B1- 9 272 599
- Anatoly Danilevich ET AL: "Verschiedene Methoden zur Kapaziätsbestimmung - Universität Erlangen - Nürnberg", , 28. März 2016 (2016-03-28), XP055370015, Gefunden im Internet: URL:http://pp.physik.uni-erlangen.de/group s/ws0506/ppg10/protokolle/protokoll_kapazi taet.pdf [gefunden am 2017-05-08]

## Beschreibung

Die Erfindung betrifft ein luftgefedertes, ein Fahrgestell mit wenigstens einer Achse und eine elektronische Niveauregelungseinrichtung aufweisendes Fahrzeug entsprechend den Merkmalen des Anspruchs 1 sowie ein Verfahren zur elektronischen Niveauregelung eines luftgefederten Fahrzeugs entsprechend den Merkmalen des Anspruchs 5.

Eine derartige elektronische Niveauregelungsvorrichtung ist in der Firmendruckschrift "Elektronische Niveauregelung für luftgefederte Anhängefahrzeuge (ECAS), Funktions- und Einbauhinweise, 3. Ausgabe" beschrieben, die im Internet unter dem Link http://inform.wabco-auto.com/intl/pdf/815/00/25/8150200253_t1.pdf herunterladbar ist. Bei dieser Niveauregelungsvorrichtung ist ein Wegsensor am Fahrzeugaufbau befestigt und über ein Hebelsystem mit der Fahrzeugachse verbunden. Der Wegsensor erfasst in bestimmten Zeitabständen den Abstand zwischen der Achse und dem Fahrzeugaufbau. Die Zeitabstände hängen beispielsweise von der Betriebsart (Fahr- oder Ladebetrieb) des Fahrzeugs ab. Der ermittelte Messwert ist der Istwert eines Regelkreises, welcher an ein elektronisches Steuergerät weitergeleitet wird. In dem elektronischen Steuergerät wird dieser Istwert mit einem in dem Steuergerät abgespeicherten Sollwert verglichen. Bei einer unzulässigen Differenz zwischen dem Istwert und dem Sollwert wird einem Magnetventil der elektronischen Niveauregelungsvorrichtung ein Stellsignal übermittelt. In Abhängigkeit von diesem Stellsignal steuert das Magnetventil die Luftfedern des Fahrzeugs an und belüftet oder entlüftet diese. Durch die Druckänderung in den Luftfedern ändert sich der Abstand zwischen Fahrzeugachse und Fahrzeugaufbau. Der Abstand wird dann erneut durch den Wegsensor erfasst und der Zyklus beginnt von vorn.

In der genannten Druckschrift sind Einzelheiten zum Weggeber nicht angegeben, jedoch sind in der DE 195 26 077 C2 ein Verfahren und eine Vorrichtung zum Kalibrieren der Fahrzeughöhe eines Fahrzeuges betreffend Angaben zu finden, wonach verschiedene Arten von Positionssensoren verwendet werden können, die entweder veränderliche elektrische Widerstände, veränderliche magnetische Widerstände, veränderliche Kapazitäten oder Halleffektsensoren sein können. Diese Positionssensoren können berührend oder berührungslos arbeitend ausgebildet sein. Aus der DE 10 2007 020 043 A1 sind optisch arbeitende Höhenstandsensoren bekannt, jedoch handelt es sich bei all diesen Höhensensoren um gesondert gefertigte Bauteile, die zwischen einem Fahrgestell und einer Achse angeordnet oder in jeweils eine Luftfeder integriert sind.

EP 1 980 426 A2 offenbart eine Längslenkeraufhängung für ein Fahrzeug. Eine Schwenkbewegung eines Längslenkers ist durch eine Luftfeder gedämpft, über die auch eine Höhe eines Fahrzeugrahmens relativ zum Boden einstellbar ist. Die Längslenkeraufhängung weist einen Höhensensor auf. Der Höhensensor arbeitet mit einer Änderung einer Kapazität, um ein Regel- oder Steuersignal zu erzeugen, um eine Änderung einer Höhe des Fahrzeugrahmens relativ zu dem Längslenker einzustellen. Der Höhensensor weist einen Kondensator mit einem Satz von mit einem Abstand angeordneten stationären Platten auf, zwischen denen ein Satz bewegliche Platten angeordnet ist, die einen Kapazitätsbrückenkreis ausbilden.

DE 38 21 569 A1 offenbart eine Vorrichtung zur Ermittlung eines Einfederniveaus an einem über Luftfederbälge abgefederten und über Stoßdämpfer gedämpften Nutzfahrzeug, wobei der Ist-Wert des Einfederniveaus durch Sensoren festgestellt und zur Auswertung an nachgeordnete Einreichtungen weitergeleitet wird. Dazu ist der Stoßdämpfer sensoriert, indem jeweils beide gegeneinander beweglichen Stoßdämpferteile des Stoßdämpfers mit Sensorteilen ausgestattet sind. Die Sensorteile erzeugen den Relativbewegungen der beiden Stoßdämpferteile entsprechende elektrische Signale, die zur Einstellung des Einfederniveaus herangezogen werden. Der Stoßdämpfer ist kapazitiv sensoriert, indem er partiell als Zylinderkondensator mit voneinander isolierten, gegenseitig axial ineinander verschiebbaren und an jeweils einem der beiden gegeneinander beweglicher Stoßdämpferteile angeordneten Rohrelektroden ausgebildet ist.

DE 44 15 760 C1 offenbart ein Verfahren zum gesteuerten Heben und Senken eines Fahrzeughecks eines Fahrzeugs. Zur Einregelung eines in eine Steuerung eingegebenen Soll-Abstandes einer Hinterachse des Fahrzeugs von einem Fahrzeugaufbau des Fahrzeugs werden von einem Ist-Wertgeber proportionale Spannungssignale in Abhängigkeit von einem Ist-Wert des Abstandes des Fahrzeugaufbaus von der Hinterachse erzeugt und der Steuerung zugeführt. Am Fahrzeugaufbau ist ein elektrischer Winkelgeber vorgesehen, der mit der Steuerung verbunden ist. Durch den Winkelgeber wird laufend ein Winkel gemessen, der etwa proportional zu einer Strecke ist, die sich die Hinterachse auf und ab bewegt.

CN 2 151 913 Y offenbart eine Vibrationskompensationsvorrichtung für ein elektrisches Eisenbahnfahrzeug. Die Vibrationskompensationsvorrichtung besteht aus zwei Sätzen von horizontalen und vertikalen kapazitiven Verlagerungssensoren in der Form von Platten. Jeweils eine Platte eines Satzes ist an einem Aufbau des Eisenbahnfahrzeugs angebracht und die andere Platte des Satzes ist an einem horizontalen oder vertikalen Bereich eines Achsgehäuses angeordnet oder das Achsgehäuse wird als die andere Platte genutzt. Mittels der Verlagerungssensoren wird eine Frequenz einer Oszillation des Eisenbahnfahrzeug während seines Betriebs bestimmt.

Vor diesem Hintergrund liegt der Erfindung die Aufgabe zugrunde, eine elektronische Niveauregelungsvorrichtung für ein luftgefedertes Fahrzeug vorzuschlagen, die einen kapazitiv arbeitenden Höhensensor nutzt, bei der dieser Höhensensor jedoch nicht als gesondertes Bauteil ausgebildet und zu montieren ist. Außerdem soll durch die Erfindung ein Verfahren zur elektronischen Niveauregelung vorgestellt werden, welches ohne einen als gesondertes Bauteil ausgebildeten kapazitiven Höhensensor arbeiten kann.

Die Erfindung betrifft demnach zunächst ein luftgefedertes Fahrzeug, beispielsweise ein luftgefedertes Anhängefahrzeug, welches ein Fahrgestell mit wenigstens einer Achse aufweist, mit einer elektronischen Niveauregelungsvorrichtung, wobei an der Achse wenigstens zwei Räder angeordnet sind, wobei zwischen der Achse und dem Fahrgestell für zumindest eines der Räder eine Luftfeder angeordnet ist, wobei eine elektronische Steuereinheit eine Niveauregelung durch Ansteuern eines Magnetventils bewirken kann, wobei zur Niveauregelung das Magnetventil der wenigstens einen Luftfeder Druckluft aus einem Druckluftspeicher zuführen oder aus der Luftfeder in die

Atmosphäre ablassen kann, und bei der wenigstens ein kapazitiver Höhensensor für die wenigstens eine Achse vorhanden ist, mittels dem der Abstand zwischen dem Fahrgestell und der wenigstens einen Achse feststellbar ist.

Zur Lösung der gestellten Aufgabe ist bei dieser Niveauregelungsvorrichtung vorgesehen, dass der kapazitive Höhensensor eine veränderliche Kapazität aufweist, welche das Fahrgestell zusammen mit der wenigstens einen Achse bildet.

Demnach kann der veränderbare Abstand zwischen dem Fahrgestell und einer Fahrwerksachse eines Fahrzeugs ohne einen gesondert zu beschaffenden und zu montierenden Abstandssensor ermittelt werden. Der kapazitive Höhensensor ist in seinen Sensorelementen vielmehr durch zwei sowieso am Fahrzeug vorhandene Bauteile gebildet.

Das Fahrgestell bildet zusammen mit der wenigstens einen Achse einen Kondensator, welcher in Abhängigkeit von deren gegenseitigen Abstand eine veränderliche elektrische Kapazität hat, dass diese veränderliche elektrische Kapazität mittels eines Schaltkreises messbar ist, und dass die elektronische Steuereinheit derart ausgebildet ist, dass diese aus dem ermittelten Wert der veränderlichen elektrischen Kapazität ein Steuersignal für die Betätigung des Magnetventils erzeugt.

Die Erfindung geht von der Überlegung aus, dass galvanisch getrennte Bauelemente, deren Abstand zueinander veränderbar ist, grundsätzlich einen Kondensator mit einer von deren gegenseitigen Abstand abhängigen elektrischen Kapazität bilden. Je geringer der Abstand der galvanisch getrennten Bauelemente ist, desto größer ist die elektrische Kapazität des Kondensators. Dies gilt auch für das Fahrgestell eines luftgefederten Fahrzeugs gegenüber einer davon galvanisch getrennten Achse, so dass es genügt, die Kapazität dieses Kondensators in Abhängigkeit vom Abstand zwischen dem Fahrgestell und der Achse zu messen, um daraus ein Steuersignal für die Niveauregelung abzuleiten. Hieraus folgt, dass das Fahrgestell und die Achse die Grundelemente eines kapazitiven Höhensensors bilden, dessen in Abhängigkeit von deren gegenseitigem Abstand veränderliche elektrische Kapazität als Ausgangswert für die Erzeugung eines Steuersignals für die Niveauregelung nutzbar ist.

Um dieses Steuersignal erzeugen zu können, ist gemäß einer weiteren Ausgestaltung der erwähnten Niveauregelungsvorrichtung vorgesehen, dass in der elektronischen Steuereinheit ein Schaltkreis integriert ist, der eine Gleichspannungsquelle zum periodischen Erzeugen einer Rechteckspannung U1, einen Ladewiderstand R1 und eine Zeit-Spannungs-Messeinheit aufweist, dass mit dem Schaltkreis derjenige Zeitraum Δt ermittelbar ist, welcher zwischen dem Beginn der Beaufschlagung des Kondensators mit der abstandsabhängig veränderlichen elektrischen Kapazität C2 mit der über den Ladewiderstand R1 zugeführten Rechteckspannung U1 bis zum Erreichen eines vorgegebenen Ladespannungswertes U2 an diesem Kondensator vergeht, dass in der elektronischen Steuereinheit mithilfe der Formel C2 = (R1/Δt - 1/C1)⁻¹ [nF] der Wert der elektrischen Kapazität C2 des Kondensators bei Ablauf des ermittelten Zeitraumes Δt [s] berechenbar ist, worin die konstante elektrische Kapazität C1 anderer kapazitiver Elemente berücksichtigt ist, welche in Reihe mit dem Kondensator geschaltet sind, dass in der elektronischen Steuereinheit Wertepaare von unterschiedlichen Kapazitäten C2 des Kondensators mit zugeordneten Abständen D des Fahrgestells zur Achse abgespeichert sind, dass die Steuereinheit derart aufgebaut ist, dass mit dieser aus einem aktuell ermittelten Wert für die Kapazität C2 des Kondensators der zugeordnete Abstandswert für den aktuellen Abstand D zwischen dem Fahrgestell und der Achse auffindbar ist, und dass die Steuereinheit derartig aufgebaut ist, dass mit dieser durch einen Vergleich des ermittelten aktuellen Abstand D mit einem Soll-Abstandswert ein Steuersignal für die Betätigung des Magnetventils erzeugbar ist.

Hierbei kann gemäß einer Ausführungsform vorgesehen sein, dass der vorgegebene, den Ablauf des Zeitraums Δt bestimmende Ladespannungswert U2 festgelegt ist durch das 0,67-fache des Wertes des Maximums der angelegten Rechteckspannung U1. Da sich der Kondensator mit der abstandsabhängigen und damit veränderbaren Kapazität C2 mit einem asymptotischen Verlauf elektrisch auflädt, hat sich dieser Wert als vorteilhaft erwiesen, worauf noch eingegangen wird.

Weiter ist bevorzugt vorgesehen, dass an der wenigstens einen Achse für jedes Rad jeweils ein Drehgeschwindigkeitssensor zum Abgeben von Drehgeschwindigkeitssignalen für ein Antiblockiersystem oder ein elektronisches Bremssystem angeordnet ist, und dass diese Drehgeschwindigkeitssensoren jeweils das messbare, konstante und mit dem Kondensator in Reihe geschaltete kapazitive Element bilden, wobei die Drehgeschwindigkeitssignale der Drehgeschwindigkeitssensoren und die zur Kapazitätsbestimmung notwendigen Spannungsmesswerte U im Schaltkreis in der elektronischen Steuereinheit für die weitere Verarbeitung voneinander getrennt sind.

Durch die Verwendung eines ohnehin vorhandenen Drehgeschwindigkeitssensors, dessen Signale über elektrische Leitungen zur elektronischen Steuereinheit gelangen, zur Übermittlung auch der Information über die Höhe der Ladespannung, werden keine zusätzlichen Bauteile und Verkabelungen benötigt. Es ist lediglich erforderlich, die elektronische Steuereinheit für die getrennte Verarbeitung der Drehgeschwindigkeitssignale und der Ladespannungssignale einzurichten.

Die erwähnte, sich mit dem Abstand D zwischen dem Fahrgestell und der wenigstens einen Achse sich verändernde elektrische Kapazität C2 kann nicht nur durch die Messung desjenigen Zeitraumes Δt ermittelt werden, welcher bis zum Erreichen einer zuvor festgelegten elektrischen Ladespannung U2 bei einem Lade- oder Entladevorgang vergeht. Diese elektrische Kapazität C2 kann auch mittels einer an sich bekannten Resonanzfrequenzmessung an einem resonanzfähigen LC-Kreis durchgeführt werden, wobei der LC-Kreis bekanntermaßen eine Spule L und einen Kondensator C aufweist. Der Kondensator wäre dann ebenfalls durch das Fahrgestell und die wenigstens einen Achse des Fahrzeugs gegeben. Außerdem kann die sich mit dem Abstand D zwischen dem Fahrgestell und der wenigstens einen Achse verändernde elektrische Kapazität C2 mittels einer Messung des Stromverlaufes beim Anlegen einer Wechselspannung bestimmt werden.

Die verfahrensbezogene Aufgabe ist gelöst durch-ein Verfahren zur elektronischen Niveauregelung eines luftgefederten Fahrzeugs, beispielsweise eines luftgefederten Anhängefahrzeugs, welches wenigstens eine Achse und zwei Räder aufweist, wobei zwischen der Achse und dem Fahrgestell für zumindest eines der Räder eine Luftfeder angeordnet ist, und bei dem eine elektronische Steuereinheit eine Niveauregelung durch Ansteuern eines Magnetventils bewirkt, wobei zur Niveauregelung das Magnetventil der wenigstens einen Luftfeder Druckluft aus einem Druckluftspeicher zuführt oder aus der Luftfeder in die Atmosphäre ablässt, gekennzeichnet durch folgende Schritte:
- Ermittlung einer vom Abstand D zwischen der Achse und dem Fahrgestell abhängigen veränderlichen Kapazität eines Kondensators, wobei das Fahrgestell zusammen mit der wenigstens einen Achse den Kondensator bildet,
- Erzeugung eines von der veränderlichen Kapazität abhängigen Steuersignals für das Ansteuern des Magnetventils zur Niveauregelung.

Demnach kann die Erzeugung eines Steuersignals für das Ansteuern des Magnetventils zur Niveauregelung gemäß dem Verfahren alleine durch die Ermittlung der vom Abstand D zwischen der Achse und dem Fahrgestell abhängigen veränderlichen Kapazität eines Kondensators erfolgen, welcher durch das Fahrgestell und wenigstens einer Achse eines Fahrzeugs gebildet ist.

In weiterer Ausgestaltung dieses Verfahren kann dieses durch die folgenden, weiteren Verfahrensschritte gekennzeichnet sein:
- periodisches Erzeugen einer Rechteckspannung mittels eines Schaltkreises, wobei der Schaltkreis eine Gleichspannungsquelle, einen Ladewiderstand R1 und eine Zeit-Spannungs-Messeinheit aufweist, wobei der Schaltkreis zum Ermitteln des Anstiegs einer an den durch das Fahrgestell und die Achse gebildeten Kondensator gelangenden Ladespannung über die Zeit sowie in Abhängigkeit von einer von der Kapazität des durch das Fahrgestell und die Achse gebildeten Kondensators und damit in Abhängigkeit vom Abstand D zwischen der Achse und dem Fahrgestell verwendet wird,
- im Fahrzeugbetrieb periodisches Berechnen der aktuellen, abstandsabhängigen Kapazität C2 des durch das Fahrgestell und die Achse gebildeten Kondensators mittels der Formel C2 = (R1/Δt - 1/C1)⁻¹ [nF], worin Δt [s] der gemessene Zeitraum bis zum Erreichen eines vorgegeben Spannungswertes U2 [V] der Rechteckspannung U1 [V] ist, und worin die konstante elektrische Kapazität C1 anderer kapazitiver Elemente berücksichtigt ist, welche in Reihe mit dem Kondensator geschaltet sind, und
- Einregeln eines vorgegeben Sollabstandes zwischen Fahrgestell und Achse unter Heranziehung der gespeicherten Wertepaare für die veränderliche Kapazität und dem jeweils zugeordneten Abstandswert.

Zur Kalibrierung der Niveauregelungsvorrichtung kann in Weiterbildung der Erfindung verfahrensgemäß vorgesehen sein, dass diese erfolgt durch
- Messen der konstanten Kapazität C1 eines anderen kapazitiven Elements, welches durch einen Drehgeschwindigkeitssensor gebildet ist, der mit dem durch das Fahrgestell und die Achse gebildeten Kondensator in Reihe geschaltet ist, und Abspeichern des Wertes der gemessenen konstanten Kapazität C1 in der Steuereinheit, sowie
- Messen von Wertepaaren der Kapazität C2 des durch das Fahrgestell und die Achse gebildeten Kondensators und des jeweils eingestellten Wertes für den Abstand D bei verschiedenen Abständen D des Fahrgestells von der Achse, und Abspeichern der Wertepaare in der Steuereinheit.

Weiter wird es als vorteilhaft beurteilt, wenn vorgesehen ist, dass zur Berechnung der aktuellen Kapazität C2 des durch das Fahrgestell und die Achse gebildeten Kondensators die Dauer desjenigen Zeitraums Δt herangezogen wird, welche von dem Aufschalten der Rechteckspannung U1 bis zum Erreichen eines Ladespannungswertes U2 vergeht, der dem 0,67-fachen des Maximums der Rechteckspannung U1 entspricht.

Außerdem kann verfahrensgemäß vorgesehen sein, dass nur an einer der Achsen des Fahrzeugs der Abstand D zwischen dem Fahrgestell und der Achse bestimmt wird, und dass dieser ermittelte Abstand D zur gleichen und gleichzeitigen Niveauregelung anderer Achsen des Fahrzeugs durch die elektronische Steuereinheit verwendet wird.

Die Erfindung wird nachstehend anhand eines in der Zeichnung dargestellten Ausführungsbeispiels näher erläutert. In der Zeichnung zeigt
Fig. 1 eine ausschnittweise schematische Darstellung eines Fahrzeugs mit einer luftgefederten Achse,
Fig. 2 ein schematisches Diagramm der elektrischen Kapazität C2 eines durch das Fahrgestell und eine Achse des luftgefederten Fahrzeugs in Abhängigkeit von deren Abstand D gebildeten Kondensators,
Fig. 3 ein Prinzipschaltbild einer Schaltung zur Messung der genannten abstandsabhängigen elektrischen Kapazität C2,
Fig. 4 ein Diagramm des Ladespannungsverlaufs über die Zeit t an dem durch das Fahrgestell und die Achse gebildeten Kondensator, und
Fig. 5 ein Prinzipschaltbild einer Schaltung zur Messung der abstandsabhängigen elektrischen Kapazität C2 des durch das Fahrgestell und die Achse gebildeten Kondensators mit Benutzung eines Drehgeschwindigkeitssensors für ein Rad an der Achse des luftgefederten Fahrzeugs.

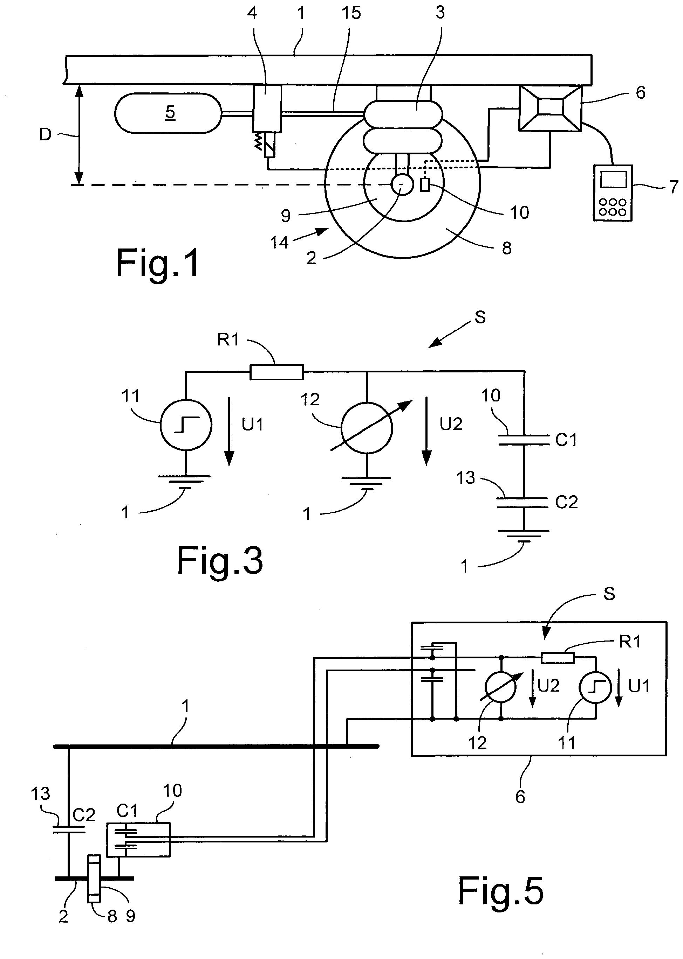

Fig. 1 zeigt demnach schematisch einen Abschnitt eines Fahrgestells 1 eines luftgefederten Fahrzeugs, insbesondere eines luftgefederten Anhängefahrzeugs. Das Fahrgestell 1 ist über jeweils eine Luftfeder 3 pro Fahrzeugrad 14 mit mindestens einer Achse 2 verbunden. Jedes der Fahrzeugräder 14 besteht aus einem Reifen 8 und einer Felge 9, so dass die Achse 2 und das Fahrgestell 11 von der Fahrbahn beziehungsweise von Fahrwegelementen elektrisch isoliert sind. Der Abstand D der Achse 2 vom Fahrgestell 1 lässt sich mittels einer elektronischen Steuereinheit 6 auf vorgebbare Sollwerte einstellen. Hierzu leitet die Steuereinheit 6 nach Nutzung von Informationen über den aktuellen Abstand D Signale an ein Magnetventil 4, welches in einer pneumatischen Verbindungsleitung 15 zwischen einem Druckluftspeicher 5 und den Luftfedern 3 angeordnet ist, und welches je nach eingestellter Sollhöhe bei Abweichungen des Abstandes D Druckluft aus dem Druckluftspeicher 5 den Luftfedern 3 zuführt oder aus den Luftfedern 3 in die Atmosphäre ablässt. Diese Niveauregelung erfolgt normalerweise automatisch anhand von in der elektronischen Steuereinheit 6 gespeicherten Daten und Regelungsprogrammen, jedoch kann auch eine manuell zu bedienende Bedieneinheit 7 vorgesehen sein, mittels der in die Steuereinheit 6 Solldaten für den gewünschten Abstand D eingeben werden können.

Die elektronische Steuereinheit 6 kann eine Motorsteuereinheit oder, wie im vorliegenden Fall dargestellt, ein Achsmodulator sein. In eine solche Motorsteuereinheit oder in einen Achsmodulator kann auch ein Antiblockiersystem oder in ein elektronisches Bremssystem integriert sein, wofür dann ein Drehgeschwindigkeitssensor 10 an der Achse 2 für jedes Fahrzeugrad 14 vorgesehen ist. Dieser Drehgeschwindigkeitssensor 10 leitet Drehgeschwindigkeitssignale an ein Antiblockiersystem oder ein elektronisches Bremssystem zum Ansteuern der Radbremsen, um ein Blockieren der Räder beim Betätigen der Betriebsbremse des Fahrzeugs zu verhindern.

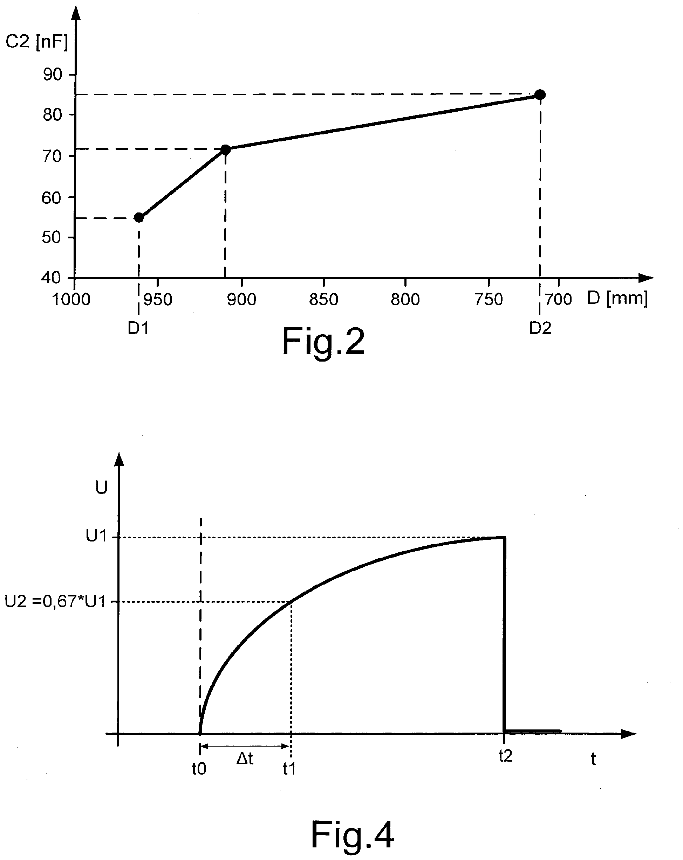

Das Diagramm gemäß Fig. 2 zeigt, dass die abstandsabhängige und damit veränderliche elektrische Kapazität C2 des durch das Fahrgestell 1 und die Achse 2 gebildeten Kondensators 13 ausgehend von einem Minimalwert bei maximalem Abstand D1 der Achse 2 vom Fahrgestell 1 über einen mittleren Wert bis zu einem Maximalwert bei einem minimalen Abstand D2 ansteigt.

Fig. 3 zeigt ein Prinzipschaltbild einer Schaltung S zur Messung der veränderlichen Kapazität C2 des durch das Fahrgestell 1 und die davon galvanisch getrennte Achse 2 gebildeten Kondensators 13. Mit diesem Kondensator 13 ist ein weiterer Kondensator 10 mit einer in bekannter Weise messbaren konstanten elektrischen Kapazität C1 in Reihe geschaltet, welcher hier durch den erwähnten Drehgeschwindigkeitssensor 10 für das Fahrzeugrad 14 gebildet ist.

Mittels einer Gleichspannungsquelle 11, die periodisch eine Rechteckspannung U1 erzeugt, lassen sich die in Reihe geschalteten Kondensatoren, nämlich der durch den Drehgeschwindigkeitssensor 10 gebildete Kondensator mit der konstanten Kapazität C1 und der durch das Fahrgestell 1 sowie die Achse 2 gebildete Kondensator 13 mit seiner abstandsabhängigen Kapazität C2 über einen Ladewiderstand R1 aufladen. Eine diesbezügliche Ladespannungskurve U2 = f (t) ist in Fig. 4 dargestellt. Gut erkennbar ist darin, dass der Anstieg der Ladespannung U2 nicht augenblicklich auf den maximalen Wert der angelegten Rechteckspannung U1 erfolgt, sondern dass dafür ein gewisser Zeitraum Δt von einem Zeitpunkt t0 bis zu einem Zeitpunkt t1 notwendig ist. Zu einem späteren Zeitpunkt t2 ist der Ladespannungszuwachs periodisch auf Null abgefallen. Da sich die Ladespannung U2 asymptotisch der angelegten Rechteckspannung U1 nähert, wird mittels einer Zeit-Spannungs-Messeinheit 12 lediglich der Zeitraum Δt zwischen dem Zeitpunkt t0 des Beginns des Ladezeitraums und dem Erreichen eines vorbestimmten Ladespannungswertes U2 gemessen, welcher in diesem Ausführungsbeispiel dem 0,67-fachen des maximalen Spannungswertes der angelegten Rechteckspannung U1 beträgt. Dieser Wert der Ladespannung U2 = 0,67 * U1 stellt einen guten Kompromiss zwischen einen vergleichsweise gut messbaren Ladespannungswert und einer vergleichsweise kurzen Messzeit dar.

Die veränderliche Kapazität des durch das Fahrgestell 1 und die Achse 2 gebildeten Kondensators 13 lässt sich mit der Formel C2 = (R1/ Δt - 1/C1)⁽⁻¹⁾ berechnen, worin R1 der zuvor bekannte elektrische Widerstand [Ω] des Ladewiderstands R1 ist, Δt der Zeitraum [s] bis zum Erreichen der Ladespannung U2 = U1 * 0,67 [V] ist, und C1 die zuvor bekannte konstante Kapazität [nF] des Drehgeschwindigkeitssensors 10 ist. Die Spannungsquelle 11, die Zeit-Spannungs-Messeinheit 12 und die in Reihe geschalteten beiden Kondensatoren 10, 13 mit konstanter Kapazität C1 beziehungsweise mit abstandsabhängiger Kapazität C2 liegen mit jeweils einem Pol am Fahrgestell 1 an, welches den Masse-Pol in dem Fahrzeug bildet. Mit dem mithilfe der oben genannten Formel ermittelten jeweils aktuellen Wert für die abstandsabhängig sich verändernde elektrische Kapazität C2 lässt sich aus einer im Steuergerät 6 abgespeicherten Tabelle der Abstand D zwischen dem Fahrgestell 1 und der Achse 2 auslesen. Dieser Abstandswert D dient dem Steuergerät 6 dann für den beschriebenen Istwert-Sollwert-Vergleich, in dessen Folge dann ein Steuersignal für das Magnetventil 4 erzeugt wird oder nicht. Die Tabelle mit den Wertepaaren für den Abstand D zwischen Fahrgestell 1 und Achse 2 sowie den zugehörigen Wert für die Kapazität C2 wurde zuvor in einer Kalibrierungsphase erstellt und im Steuergerät 6 abgespeichert.

Das detailliertere Prinzipschaltbild gemäß Fig. 5 zeigt das vereinfacht als dicker Strich dargestellte Fahrgestell 1, die schematisch dargestellte Achse 2 sowie ein aus einem Reifen 8 und einer Felge 9 bestehendes Fahrzeugrad 14. Der durch das Fahrgestell 1 und die Achse 2 gebildete Kondensator 13 mit der abstandsabhängigen Kapazität C2 ist schematisch als elektronisches Bauteil zwischen dem Fahrgestell 1 und der Achse 2 eingezeichnet. Der durch den Drehgeschwindigkeitssensor 10 gebildete Kondensator mit konstanter Kapazität C1 ist über elektrische Leitungen mit der elektronischen Steuereinheit 6 verbunden, in welcher der Schaltkreis S, bestehend aus der Gleichspannungsquelle 11 zum periodischen Erzeugen einer Rechteckspannung U1, einem Ladewiderstand R1 und einer Zeit-Spannungs-Messeinheit 12 zum Ermitteln des Anstiegs der an den durch das Fahrgestell 1 und die Achse 2 gebildeten Kondensator 13 und den durch den Drehgeschwindigkeitssensor 10 gebildeten Kondensator gelangenden Ladespannung U2, integriert ist.

Das periodische Aufladen des durch das Fahrgestell 1 und die Achse 2 gebildeten Kondensators 13 mit der abstandsabhängigen Kapazität C2 und des damit in Reihe geschalteten, durch den Drehgeschwindigkeitssensor 10 gebildeten Kondensator mit konstanter Kapazität C1 erfolgt mittels der elektronischen Steuereinheit 6. Die elektronische Steuereinheit 6 ist zudem dazu eingerichtet, die Geschwindigkeitssignale des Drehgeschwindigkeitssensors 10 und die Ladespannungssignale des Schaltkreises aus der Gleichspannungsquelle 11, der Zeit-Spannungs-Messeinheit 12 und dem Ladewiderstand R1 für die weitere Verarbeitung voneinander zu trennen. In der Steuereinheit 6 ist ein Algorithmus abgespeichert, mit dem der aktuelle Wert der veränderlichen Kapazität C2 des durch das Fahrgestell 1 und die Achse 2 gebildeten Kondensators 13 gemäß der bereits erwähnten Formel C2 = (R1/Δt - 1/C1)⁻¹ [nF] möglich ist.

Jedes Mal, wenn eine Messung erfolgt ist, wird der durch das Fahrgestell 1 und die Achse 2 gebildete Kondensator 13 sowie der durch den Drehgeschwindigkeitssensor 10 gebildete Kondensator zunächst entladen und dann die Rechteckspannung U1 nach kurzer Zeit sowie periodisch in der Schaltung S angelegt, so dass auf diese Weise die Messung des Zeitraumes Δt bis zum Erreichen einer Ladespannung mit dem Wert U2 = U1 * 0,67 sowie die Berechnung der jeweils aktuellen Kapazität C2 erfolgen kann.

Um in einem Kalibrierungsvorgang den Abstand D zwischen dem Fahrgestell 1 und der Achse 2 zur elektrischen Kapazität C2 des durch das Fahrgestell 1 und die Achse 2 gebildeten Kondensators 13 in Beziehung zu setzen, werden bei stehendem Fahrzeug Messungen mittels der in Fig. 5 dargestellten Schaltung bei unterschiedlich eingestellten Abständen D zwischen dem Fahrgestell 1 und der Achse 2 durchgeführt. Dabei wird jeweils der Zeitraum Δt bis zum Erreichen des vorbestimmten Ladespannungswertes U2 bestimmt, anschließend die Kapazität C2 mit der Formel C2 = (R1/Δt - 1/C1)⁻¹ berechnet, und schließlich die zusammengehörenden Wertepaare von Abstand D und Kapazität C2 in das Diagramm gemäß Fig. 2 beziehungsweise in eine Tabelle in der Steuereinheit 9 eingetragen und abgespeichert.

In dem in Fig. 2 dargestellten Beispiel beträgt der Maximalwert der Kapazität C2 = 85 nF bei einem von Abstand D2 = 710 mm in der niedrigsten Stellung des Fahrgestells 1 gegenüber der Achse 2. Der Minimalwert der Kapazität C2 = 56 nF wird bei einem maximalen Abstand von D = 960 mm erreicht. Bei einem dazwischen liegenden Abstand von D1 = 910 mm zwischen dem Fahrgestell 1 und der Achse 2 wird eine Kapazität von C2 = 73 nF ermittelt. Zwischenwerte werden interpoliert und ebenfalls abgespeichert.

Durch die periodische Beaufschlagung des durch den Drehgeschwindigkeitssensor 10 gebildeten Kondensators mit der konstanten Kapazität C1 und des dazu in Reihe geschalteten, durch das Fahrgestell 1 und die Achse 2 gebildeten Kondensators 13 mit der veränderlichen Kapazität C2 mit der Rechteckspannung U1 lassen sich die Ladezeiträume Δt bis zum Erreichen der Ladespannung U2 = U1 * 0,67 und daraus die aktuellen Abstandswerte D ermitteln, sowie bei einer Abweichung von einem gewählten Sollwert Korrekturen des Abstands D mittels der elektronischen Niveauregelung durchführen.

Die Figuren 1 bis 5 sind lediglich schematisch, um das der Erfindung zugrunde liegende Messprinzip zu verdeutlichen. Aus der Beschreibung dieses Prinzips ergeben sich für den Fachmann diejenigen Informationen, die er benötigt, um aufgrund seiner Fachkenntnis die realen Schaltkreise zu konstruieren und die Funktion der elektronischen Steuereinheit 6 zum Ermitteln von Abstandskorrekturwerten für den Abstand D zu programmieren, um die entsprechenden Korrekturen durch die elektronische Steuereinheit 6 durchführen zu lassen.

Die Kontaktierung des vorgestellten Messkreises erfolgt in den Ausführungsbeispielen über einen Drehgeschwindigkeitssensor 10. Dabei wird davon ausgegangen, dass die Kopplung zwischen dem elektrischen Inneren des Drehgeschwindigkeitssensors 10 und dessen Gehäuse kapazitiv ist, so dass die dort vorhandene konstante elektrische Kapazität C1 mit der eigentlich zu messenden, abstandsveränderlichen Kapazität C2 in Reihe geschaltet ist. Es ist aber auch möglich, dass die Kopplung zwischen dem elektrischen Inneren des Drehgeschwindigkeitssensors 10 und dessen Gehäuse ohmsch ist, wobei dann eine Vorrichtung und ein Verfahren zur Anwendung gelangen können, welche in der nicht vorveröffentlichten DE 10 2015 000 380 A1 der Anmelderin beschrieben sind.

Alle in der vorstehenden Figurenbeschreibung, in den Ansprüchen und in der Beschreibungseinleitung genannten Merkmale sind sowohl einzeln als auch in beliebiger Kombination miteinander einsetzbar.

## Patentansprüche

1. Luftgefedertes, ein Fahrgestell (1) mit wenigstens einer Achse (2) aufweisendes Fahrzeug mit einer elektronischen Niveauregelungsvorrichtung, wobei an der Achse (2) wenigstens zwei Räder (14) angeordnet sind,
wobei zwischen der Achse (2) und dem Fahrgestell (1) für zumindest eines der Räder (14) eine Luftfeder (3) mit einem Magnetventil (4) angeordnet ist,
wobei eine elektronische Steuereinheit (6) eine Niveauregelung durch Ansteuern des Magnetventils (4) bewirken kann,
wobei zur Niveauregelung das Magnetventil (4) der wenigstens einen Luftfeder (3) Druckluft aus einem Druckluftspeicher (5) zuführen oder aus der Luftfeder (3) in die Atmosphäre ablassen kann,
und wenigstens ein kapazitiver Höhensensor für die wenigstens eine Achse (2) vorhanden ist, mittels dem der Abstand (D) zwischen dem Fahrgestell (1) und der wenigstens einen Achse (2) feststellbar ist,
wobei der kapazitive Höhensensor eine veränderliche Kapazität (C2) aufweist, welche das Fahrgestell (1) zusammen mit der wenigstens einen Achse (2) bildet, wobei das Fahrgestell (1) zusammen mit der wenigstens einen Achse (2) einen Kondensator (13) bildet, welcher in Abhängigkeit von deren gegenseitigen Abstand (D) die veränderliche elektrische Kapazität (C2) hat,
wobei die veränderliche elektrische Kapazität (C2) mittels eines Schaltkreises (S) messbar ist,
**dadurch gekennzeichnet, dass** die elektronische Steuereinheit (6) derart ausgebildet ist, dass diese aus dem ermittelten Wert der veränderlichen elektrischen Kapazität (C2) ein Steuersignal für das Ansteuern des Magnetventils (4) erzeugt.

2. Fahrzeug nach Anspruch 1, **dadurch gekennzeichnet, dass** in der elektronischen Steuereinheit (6) ein Schaltkreis (S) integriert ist, der eine Gleichspannungsquelle (11) zum periodischen Erzeugen einer Rechteckspannung (U1), einen Ladewiderstand (R1) und eine Zeit-Spannungs-Messeinheit (12) aufweist,
dass der Schaltkreis (S) eingerichtet ist, denjenigen Zeitraum (Δt) zu ermitteln, welcher zwischen dem Beginn der Beaufschlagung des Kondensators (13) mit der abstandsabhängigen elektrischen Kapazität (C2) mit der über den Ladewiderstand (R1) zugeführten Rechteckspannung (U1) bis zum Erreichen eines vorgegebenen Ladespannungswertes (U2) an diesem Kondensator (13) vergeht, dass die elektronische Steuereinheit (6) eingerichtet ist, mithilfe der Formel C2 = (R1 /Δt - 1 /C1)⁻¹ [nF] den Wert der elektrischen Kapazität (C2) des Kondensators (13) bei Ablauf des ermittelten Zeitraumes (Δt) zu berechnen, worin die konstante elektrische Kapazität (C1) anderer kapazitiver Elemente berücksichtigt ist, welche in Reihe mit dem Kondensator (13) geschaltet sind, dass in der elektronischen Steuereinheit (6) Wertepaare von unterschiedlichen Kapazitäten (C2) des Kondensators (13) mit zugeordneten Abständen (D) des Fahrgestells (1) zur Achse (2) abgespeichert sind, dass die Steuereinheit (6) derart aufgebaut ist, dass sie aus einem aktuell ermittelten Wert für die Kapazität (C2) des Kondensators (13) den zugeordneten Abstandswert für den aktuellen Abstand (D) zwischen dem Fahrgestell (1) und der Achse (2) auffindet, und dass die Steuereinheit (6) derartig aufgebaut ist, dass sie durch einen Vergleich des ermittelten aktuellen Ist-Abstandswertes (D) mit einem Soll-Abstandswert ein Steuersignal für die Betätigung des Magnetventils (4) erzeugt.

3. Fahrzeug nach Anspruch 2, **dadurch gekennzeichnet, dass** der vorgegebene Ladespannungswert (U2) bestimmt ist durch das 0,67-fache des Wertes des Maximums der angelegten Rechteckspannung (U1).

4. Fahrzeug nach einem der Ansprüche 1 bis 3, **dadurch gekennzeichnet, dass** an der wenigstens einen Achse (2) für jedes Rad (8, 9) jeweils ein Drehgeschwindigkeitssensor (10) zum Abgeben von Drehgeschwindigkeitssignalen für ein Antiblockiersystem oder ein elektronisches Bremssystem angeordnet ist, und dass diese Drehgeschwindigkeitssensoren (10) jeweils das messbare, konstante und mit dem Kondensator (13) in Reihe geschaltete kapazitive Element bilden, wobei die Drehgeschwindigkeitssignale der Drehgeschwindigkeitssensoren (10) und die zur Kapazitätsbestimmung notwendigen Spannungsmesswerte (U) im Schaltkreis (S) in der elektronischen Steuereinheit (6) für die weitere Verarbeitung voneinander getrennt sind.

5. Verfahren zur elektronischen Niveauregelung eines luftgefederten Fahrzeugs, beispielsweise eines luftgefederten Anhängefahrzeugs,
welches wenigstens eine Achse (2) und zwei Räder (14) aufweist,
wobei zwischen der Achse (2) und dem Fahrgestell (1) für zumindest eines der Räder (14) eine Luftfeder (3) angeordnet ist,
und bei dem eine elektronische Steuereinheit (6) eine Niveauregelung durch Ansteuern eines Magnetventils (4) bewirkt, wobei zur Niveauregelung das Magnetventil (4) der wenigstens einen Luftfeder (3) Druckluft aus einem Druckluftspeicher (5) zuführt oder aus der Luftfeder (3) in die Atmosphäre ablässt, **gekennzeichnet durch** folgende Schritte:
- Ermittlung einer vom Abstand (D) zwischen der Achse (2) und dem Fahrgestell (1) abhängigen veränderlichen Kapazität (C2) eines Kondensators (13), wobei das Fahrgestell (1) zusammen mit der wenigstens einen Achse (2) den Kondensator (13) bildet,
- Erzeugung eines von der veränderlichen Kapazität (C2) abhängigen Steuersignals für das Ansteuern des Magnetventils (4) zur Niveauregelung.

6. Verfahren nach Anspruch 5, **gekennzeichnet durch** folgende Schritte:
- periodisches Erzeugen einer Rechteckspannung (U1) mittels eines Schaltkreises (S), wobei der Schaltkreis (S) eine Gleichspannungsquelle (11), einen Ladewiderstand (R1) und eine Zeit-Spannungs-Messeinheit (12) aufweist,
wobei der Schaltkreis (S) zum Ermitteln des Anstiegs einer an den durch das Fahrgestell (1) und die Achse (2) gebildeten Kondensator (13) gelangenden Ladespannung (U2) über die Zeit (t) sowie in Abhängigkeit von einer von der Kapazität (C2) des durch das Fahrgestell (1) und die Achse (2) gebildeten Kondensators (13) und damit in Abhängigkeit vom Abstand (D) zwischen der Achse (2) und dem Fahrgestell (1) verwendet wird,
- im Fahrzeugbetrieb periodisches Berechnen der aktuellen, abstandsabhängigen Kapazität (C2) des durch das Fahrgestell (1) und die Achse (2) gebildeten Kondensators (13) mittels der Formel C2 = (R1/Δt - 1/C1)⁻¹ [nF],
worin Δt [s] der gemessene Zeitraum bis zum Erreichen eines vorgegeben Ladespannungswertes (U2) [V] der Rechteckspannung (U1) [V] ist,
und worin die konstante elektrische Kapazität (C1) anderer kapazitiver Elemente berücksichtigt ist, welche in Reihe mit dem Kondensator (13) geschaltet sind, sowie
- Einregeln eines vorgegeben Sollabstandes zwischen Fahrgestell (1) und Achse (2) unter Heranziehung der gespeicherten Wertepaare für die veränderliche Kapazität (C2) und dem jeweils zugeordneten Abstandswert (D).

7. Verfahren nach Anspruch 6, **dadurch gekennzeichnet, dass** das Kalibrieren der Niveauregelungsvorrichtung erfolgt durch
- Messen der konstanten Kapazität (C1) eines anderen kapazitiven Elements, welches durch einen Drehgeschwindigkeitssensor (10) gebildet ist, der mit dem durch das Fahrgestell (1) und die Achse (2) gebildeten Kondensator (13) in Reihe geschaltet ist, und Abspeichern des Wertes der gemessenen konstanten Kapazität (C1) in der Steuereinheit (6), sowie
- Messen von Wertepaaren der Kapazität (C2) des durch das Fahrgestell (1) und die Achse (2) gebildeten Kondensators (13) und des jeweils eingestellten Wertes für den Abstand (D) bei verschiedenen Abständen (D) des Fahrgestells (1) von der Achse (2), und Abspeichern der Wertepaare in der Steuereinheit (6).

8. Verfahren nach Anspruch 6 oder 7, **dadurch gekennzeichnet, dass** zur Berechnung der aktuellen Kapazität (C2) des durch das Fahrgestell (1) und die Achse (2) gebildeten Kondensators (13) die Dauer desjenigen Zeitraumes (Δt) herangezogen wird, welche von dem Aufschalten der Rechteckspannung (U1) bis zum Erreichen eines Ladespannungswertes (U2) vergeht, der dem 0,67-fachen des Maximums der Rechteckspannung (U1) entspricht.

9. Verfahren nach einem der Ansprüche 5 bis 8, **dadurch gekennzeichnet, dass** nur an einer der Achsen (2) des Fahrzeugs der Abstand (D) zwischen dem Fahrgestell (1) und der Achse (2) bestimmt wird, und dass dieser ermittelte Abstand (D) zur gleichen und gleichzeitigen Niveauregelung anderer Achsen (2) des Fahrzeugs durch die elektronische Steuereinheit (6) verwendet wird.

## Claims

1. Pneumatically-suspended vehicle comprising a chassis (1), which has at least one axle (2), and an electronic level-control device, at least two wheels (14) being arranged on the axle (2),
a pneumatic spring (3) that has a solenoid valve (4) being arranged between the axle (2) and the chassis (1) for at least one of the wheels (14),
an electronic control unit (6) being able to bring about level control by activating the solenoid valve (4),
it being possible, for level control, for the solenoid valve (4) of the at least one pneumatic spring (3) to supply compressed air from a compressed-air reservoir (5) or to let it out of the pneumatic spring (3) into the atmosphere,
and at least one capacitive height sensor is provided for the at least one axle (2), by means of which the distance (D) between the chassis (1) and the at least one axle (2) can be determined,
the capacitive height sensor having a variable capacitance (C2) which is formed by the chassis (1) together with the at least one axle (2), the chassis (1) together with the at least one axle (2) forming a capacitor (13) which, depending on the mutual distance (D) of the chassis and the axle, has the variable electrical capacitance (C2),
the variable electrical capacitance (C2) being measurable by means of a circuit (S),
**characterized in that** the electronic control unit (6) is designed such that it generates a control signal for activating the solenoid valve (4) from the determined value of the variable electrical capacitance (C2).

2. Vehicle according to claim 1, **characterized in that** a circuit (S) is integrated in the electronic control unit (6) and comprises a DC voltage source (11) for periodically generating a square-wave voltage (U1), a charging resistor (R1) and a time-voltage measuring unit (12),
**in that** the circuit (S) is configured to determine the particular time period (Δt) that elapses between starting to apply the distance-dependent electrical capacitance (C2) to the capacitor (13) together with the square-wave voltage (U1) supplied via the charging resistor (R1) and reaching a predefined charging voltage value (U2) on this capacitor (13) is reached, **in that** the electronic control unit (6) is configured to calculate the value of the electrical capacitance (C2) of the capacitor (13) when the determined time period (Δt) has elapsed using the formula C2 = (R1/Δt - 1/C1)⁻¹ [nF], in which the constant electrical capacitance (C1) of other capacitive elements which are connected in series with the capacitor (13) is taken into account, **in that** value pairs of different capacitances (C2) of the capacitor (13) are stored in the electronic control unit (6) together with associated distances (D) of the chassis (1) from the axle (2), **in that** the control unit (6) is designed such that it locates the assigned distance value for the present distance (D) between the chassis (1) and the axle (2) from a presently determined value for the capacitance (C2) of the capacitor (13), **and in that** the control unit (6) is designed such that it generates a control signal for actuating the solenoid valve (4) by comparing the determined present actual distance value (D) with a target distance value.

3. Vehicle according to claim 2, **characterized in that** the predefined charging voltage value (U2) is determined by 0.67 times the value of the maximum of the applied square-wave voltage (U1).

4. Vehicle according to any of claims 1 to 3, **characterized in that** a rotational speed sensor (10) for outputting rotational speed signals for an anti-lock braking system or an electronic brake system is arranged on the at least one axle (2) for each wheel (8, 9), **and in that** these rotational speed sensors (10) each form the measurable, constant capacitive element connected in series with the capacitor (13), the rotational speed signals of the rotational speed sensors (10) and the voltage measured values (U) in the circuit (S) necessary for determining the capacitance are separated from one another in the electronic control unit (6) for further processing.

5. Method for electronic level control of a pneumatically suspended vehicle, for example a pneumatically suspended trailer vehicle,
which comprises at least one axle (2) and two wheels (14),
a pneumatic spring (3) being arranged between the axle (2) and the chassis (1) for at least one of the wheels (14),
and in which an electronic control unit (6) brings about level control by activating a solenoid valve (4), for level control, the solenoid valve (4) of the at least one pneumatic spring (3) supplying compressed air from a compressed-air reservoir (5) or letting it out of the pneumatic spring (3) into the atmosphere, **characterized by** the following steps:
- determining a variable capacitance (C2) of a capacitor (13) that is dependent on the distance (D) between the axle (2) and the chassis (1), the chassis (1) together with the at least one axle (2) forming the capacitor (13),
- generating a control signal dependent on the variable capacitance (C2) for activating the solenoid valve (4) for level control.

6. Method according to claim 5, **characterized by** the following steps:
- periodically generating a square-wave voltage (U1) by means of a circuit (S), the circuit (S) having a DC voltage source (11), a charging resistor (R1) and a time-voltage measuring unit (12),
the circuit (S) being used to determine the rise in a charging voltage (U2) that reaches the capacitor (13) formed by the chassis (1) and the axle (2) over time (t) and depending on a on the capacitance (C2) of the capacitor (13) formed by the chassis (1) and the axle (2) and thus depending on the distance (D) between the axle (2) and the chassis (1),
- during vehicle operation, periodically calculating the present, distance-dependent capacitance (C2) of the capacitor (13) formed by the chassis (1) and the axle (2) using the formula C2 = (R1/Δt- 1/C1)⁻¹ [nF],
in which Δt [s] is the measured time period until a predefined charging voltage value (U2) [V] of the square-wave voltage (U1) [V] is reached,
and in which the constant electrical capacitance (C1) of other capacitive elements which are connected in series with the capacitor (13) is taken into account, and
- adjusting a predefined target distance between the chassis (1) and the axle (2) using the stored value pairs for the variable capacitance (C2) and the respectively assigned distance value (D).

7. Method according to claim 6, **characterized in that** the level control device is calibrated by
- measuring the constant capacitance (C1) of another capacitive element, which is formed by a rotational speed sensor (10) connected in series with the capacitor (13) formed by the chassis (1) and the axle (2), and storing the value of the measured constant capacitance (C1) in the control unit (6), and
- measuring value pairs of the capacitance (C2) of the capacitor (13) formed by the chassis (1) and the axle (2) and of the respectively set value for the distance (D) at different distances (D) of the chassis (1) from the axle (2), and storing the value pairs in the control unit (6).

8. Method according to claim 6 or 7, **characterized in that** for calculating the present capacitance (C2) of the capacitor (13) formed by the chassis (1) and the axle (2), the duration of the particular time period (Δt) is used which elapses between switching on the square-wave voltage (U1) and reaching a charging voltage value (U2), which corresponds to 0.67 times the maximum of the square-wave voltage (U1).

9. Method according to any of claims 5 to 8, **characterized in that** the distance (D) between the chassis (1) and the axle (2) is determined only at one of the axles (2) of the vehicle, **and in that** this determined distance (D) is used for the same and simultaneous level control of other axles (2) of the vehicle by the electronic control unit (6).

## Revendications

1. Véhicule à suspension pneumatique présentant un châssis (1) comportant au moins un essieu (2), comportant un dispositif de régulation de niveau électronique, dans lequel au moins deux roues (14) sont disposées sur l'essieu (2),
dans lequel une suspension pneumatique (3) comportant une vanne électromagnétique (4) est disposée entre l'essieu (2) et le châssis (1) pour au moins l'une des roues (14),
dans lequel une unité de commande (6) électronique peut provoquer une régulation de niveau par la commande de la vanne électromagnétique (4),
dans lequel, pour la régulation de niveau, la vanne électromagnétique (4) de l'au moins une suspension pneumatique (3) peut fournir de l'air comprimé à partir d'un réservoir d'air comprimé (5) ou libérer de l'air comprimé dans l'atmosphère à partir de la suspension pneumatique (3),
et au moins un capteur de hauteur capacitif est prévu pour l'au moins un essieu (2), à l'aide duquel capteur la distance (D) entre le châssis (1) et l'au moins un essieu (2) peut être spécifiée,
dans lequel le capteur de hauteur capacitif présente une capacité (C2) variable qui forme le châssis (1), conjointement avec l'au moins un essieu (2), dans lequel le châssis (1) forme, conjointement avec l'au moins un essieu (2), un condensateur (13) qui possède la capacité (C2) électrique variable en fonction de la distance (D) qui sépare ledit châssis et ledit essieu,
dans lequel la capacité (C2) électrique variable peut être mesurée à l'aide d'un circuit (S),
**caractérisé en ce que** l'unité de commande (6) électronique est configurée de manière à générer un signal de commande pour la commande de la vanne électromagnétique (4) à partir de la valeur déterminée de la capacité (C2) électrique variable.

2. Véhicule selon la revendication 1, **caractérisé en ce qu'**un circuit (S) est intégré dans l'unité de commande (6) électronique, lequel circuit présente une source de tension continue (11) permettant de générer de façon périodique une tension rectangulaire (U1), une résistance de charge (R1) et une unité de mesure de tension-temps (12),
**en ce que** le circuit (S) est configuré pour déterminer le délai (Δt) qui s'écoule entre le début de la sollicitation du condensateur (13) comportant la capacité (C2) électrique dépendant de la distance avec la tension rectangulaire (U1) fournie par l'intermédiaire de la résistance de charge (R1) jusqu'à l'atteinte d'une valeur de tension de charge (U2) prédéfinie au niveau dudit condensateur (13), **en ce que** l'unité de commande (6) électronique est configurée pour calculer, à l'aide de la formule C2 = (R1/Δt - 1/C1)⁻¹ [nF], la valeur de la capacité (C2) électrique du condensateur (13) à l'expiration du délai (Δt) déterminé, dans laquelle formule la capacité (C1) électrique constante d'autres éléments capacitifs est prise en compte, lesquels éléments capacitifs sont connectés en série avec le condensateur (13), **en ce que** des paires de valeurs de capacités (C2) différentes du condensateur (13) sont enregistrées dans l'unité de commande (6) électronique avec des distances (D) associées entre le châssis (1) et l'essieu (2), **en ce que** l'unité de commande (6) est configurée de manière à détecter, à partir d'une valeur actuellement déterminée de la capacité (C2) du condensateur (13), la valeur de distance associée de la distance (D) actuelle entre le châssis (1) et l'essieu (2), **et en ce que** l'unité de commande (6) est configurée de manière à générer un signal de commande pour l'actionnement de la vanne électromagnétique (4) en comparant la valeur de distance (D) réelle actuelle déterminée à une valeur de distance de consigne.

3. Véhicule selon la revendication 2, **caractérisé en ce que** la valeur de tension de charge (U2) prédéfinie est déterminée par 0,67 fois la valeur du maximum de la tension rectangulaire (U1) appliquée.

4. Véhicule selon l'une des revendications 1 à 3, **caractérisé en ce que,** sur l'au moins un essieu (2), respectivement un capteur de vitesse de rotation (10) permettant de délivrer des signaux de vitesse de rotation pour un système antiblocage ou un système de freinage électronique est disposé pour chaque roue (8, 9), **et en ce que** lesdits capteurs de vitesse de rotation (10) forment respectivement l'élément capacitif mesurable, constant et connecté en série avec le condensateur (13), dans lequel les signaux de vitesse de rotation des capteurs de vitesse de rotation (10) et les valeurs de tension mesurées (U) nécessaires pour la détermination de la capacité dans le circuit (S) sont séparés les uns des autres dans l'unité de commande (6) électronique pour être traités ultérieurement.

5. Procédé permettant la régulation de niveau électronique d'un véhicule à suspension pneumatique, par exemple d'un véhicule tracté à suspension pneumatique,
lequel présente au moins un essieu (2) et deux roues (14),
dans lequel une suspension pneumatique (3) est disposée entre l'essieu (2) et le châssis (1) pour au moins l'une des roues (14),
et dans lequel une unité de commande (6) électronique provoque une régulation de niveau en commandant une vanne électromagnétique (4), dans lequel, pour la régulation de niveau, la vanne électromagnétique (4) de l'au moins une suspension pneumatique (3) fournit de l'air comprimé à partir d'un réservoir d'air comprimé (5) ou libère de l'air comprimé dans l'atmosphère à partir de la suspension pneumatique (3), **caractérisé par** les étapes suivantes :
- détermination d'une capacité (C2) d'un condensateur (13), laquelle est variable et dépend de la distance (D) entre l'essieu (2) et le châssis (1), dans lequel le châssis (1) forme, conjointement avec l'au moins un essieu (2), le condensateur (13),
- génération d'un signal de commande dépendant de la capacité (C2) variable pour la commande de la vanne électromagnétique (4) pour la régulation de niveau.

6. Procédé selon la revendication 5, **caractérisé par** les étapes suivantes :
- génération périodique d'une tension rectangulaire (U1) à l'aide d'un circuit (S), dans lequel le circuit (S) présente une source de tension continue (11), une résistance de charge (R1) et une unité de mesure de tension-temps (12),
dans lequel le circuit (S) est utilisé pour la détermination de l'augmentation d'une tension de charge (U2) qui arrive au niveau du condensateur (13) formé par le châssis (1) et l'essieu (2) au cours du temps (t), ainsi qu'en fonction d'une de la capacité (C2) du condensateur (13) formé par le châssis (1) et l'essieu (2), et donc en fonction de la distance (D) entre l'essieu (2) et le châssis (1),
- pendant le fonctionnement du véhicule, calcul périodique, à l'aide de la formule C2 = (R1/Δt - 1/C1)⁻¹ [nF], de la capacité (C2) actuelle dépendant de la distance du condensateur (13) formé par le châssis (1) et l'essieu (2),
dans laquelle formule Δt [s] représente le délai mesuré jusqu'à l'atteinte d'une valeur de tension de charge (U2) [V] prédéfinie de la tension rectangulaire (U1) [V],
et dans laquelle formule la capacité (C1) électrique constante d'autres éléments capacitifs est prise en compte, lesquels éléments capacitifs sont connectés en série avec le condensateur (13), et
- ajustement d'une distance de consigne prédéfinie entre le châssis (1) et l'essieu (2) en utilisant les paires de valeurs enregistrées concernant la capacité (C2) variable et la valeur de distance (D) respectivement associée.

7. Procédé selon la revendication 6, **caractérisé en ce que** l'étalonnage du dispositif de régulation de niveau est effectué par
- la mesure de la capacité (C1) constante d'un autre élément capacitif formé par un capteur de vitesse de rotation (10) qui est connecté en série avec le condensateur (13) formé par le châssis (1) et l'essieu (2), et par l'enregistrement de la valeur de la capacité (C1) constante mesurée dans l'unité de commande (6), ainsi que par
- la mesure de paires de valeurs de la capacité (C2) du condensateur (13) formé par le châssis (1) et l'essieu (2) et de la valeur respectivement réglée concernant la distance (D) pour les différentes distances (D) entre le châssis (1) et l'essieu (2), et par l'enregistrement des paires de valeurs dans l'unité de commande (6).

8. Procédé selon la revendication 6 ou 7, **caractérisé en ce que** la durée du délai (Δt) est utilisée pour le calcul de la capacité (C2) actuelle du condensateur (13) formé par le châssis (1) et l'essieu (2), laquelle durée va de l'application de la tension rectangulaire (U1) jusqu'à l'atteinte d'une valeur de tension de charge (U2) qui correspond à 0,67 fois le maximum de la tension rectangulaire (U1).

9. Procédé selon l'une des revendications 5 à 8, **caractérisé en ce que** la distance (D) entre le châssis (1) et l'essieu (2) est déterminée uniquement sur l'un des essieux (2) du véhicule, **et en ce que** ladite distance (D) déterminée est utilisée par l'unité de commande (6) électronique pour la régulation identique et concomitante du niveau d'autres essieux (2) du véhicule.
